# EUROPEAN PATENT SPECIFICATION

(11) **EP 4 215 418 B1**
(45) Date of publication and mention of the grant of the patent: **13.03.2024**
(21) Application number: 22153027.2
(22) Date of filing: 24.01.2022
(51) Int. Cl.: B60R 7/04, B60N 2/75

(54) **A CONSOLE BOX ASSEMBLY**
KONSOLENKASTENANORDNUNG
ENSEMBLE BOÎTIER DE CONSOLE

(43) Date of publication of application: 26.07.2023
(73) Proprietor: Marelli Corporation, Saitama-shi, Saitama 331-8501 (JP)
(72) Inventor: BOITCEV, Andrei, Milton Keynes, MK9 4AE (GB); PATANKAR, Kalpak, Milton Keynes, MK10 9RP (GB)
(74) Representative: Haseltine Lake Kempner LLP

(56) References cited:
- JP-A- H0 699 775
- KR-A- 20130 060 484

## Description

### Technical Field

The present disclosure relates to an adjustable console box for a vehicle, such as a motor vehicle.

### Background

Vehicles, such as motor vehicles, often comprise a centre console unit including a console box defining a storage volume for occupants of the vehicle to store items in during a journey in the vehicle. The console box may comprise a lid for closing the storage volume to secure the items within the storage volume. The console box may comprise a latch mechanism for securing the lid of the console box in a closed position.

Console boxes typically comprise an armrest for an occupant of the vehicle, such as a driver, to rest their arm on whilst travelling in the vehicle. It is often desirable for the position of the armrest to be adjustable, so that the occupant can arrange the armrest in an ergonomically advantageous position. When the armrest is to be used by the driver, the driver may wish to fix the position of the armrest in a suitable position to allow the driver to reach and operate vehicle controls whilst their arm is resting on the armrest. A console box assembly according to the preamble of claim 1 is known from
JP H0699775 A.

### Statements of Invention

According to an aspect of the present disclosure, there is provided a console box assembly comprising: a box body defining a storage volume and a carrier pivotally coupled to the box body. The carrier may be configured to form a lid for closing an opening into the storage volume. The console box assembly further comprises an armrest slideable relative to the carrier; and a latch mechanism for latching the carrier to the box body. The latch mechanism may be to fix the position of the carrier relative to the box body, e.g. such that the carrier closes the opening into the storage volume. The latch mechanism comprises: an opening formed in an internal wall of the box body; a claw or latch movably, e.g. slideably, supported on the carrier for engaging the opening to latch the carrier to the box body; a latch actuator coupled to the armrest; a rotation part pivotally supported on the carrier for rotation about a rotation part axis, wherein the claw is coupled the rotation part, e.g. at a position spaced apart from the rotation part axis; a first actuator member coupled to the latch actuator; and a second actuator member coupled to the rotation part, wherein the first actuator member is arranged to engage the second actuator member and urge the second actuator member to rotate the rotation part in response to actuation of the latch actuator, e.g. regardless of the slide position of the armrest, so that the claw disengages from the opening.

The second actuator member may be pivotally supported on the carrier for rotation about a second actuator member axis. The second actuator member axis may have a component parallel with the rotation part axis.

The first actuator member may be pivotally supported on the armrest for rotation about a first actuator member axis. The first actuator member axis may be at an angle relative to the second actuator member axis.

The first actuator member may have an engaging surface. The engaging surface may be arranged to contact an engagement surface formed on the second actuator member when the latch actuator is actuated, and urge the second actuator member to rotate the rotation part.

The first actuator member may be coupled to the latch actuator at a first end of the first actuator member. The engaging surface may be formed at a second end of the first actuator member. The first actuator member may be pivotally support on the armrest at a position on the first actuator member between the first and second ends.

The engagement surface may be disposed between the second actuator member axis and the position at which the second actuator member is coupled to the rotation part. The engagement surface may extend along the second actuator member in a direction with a component in a direction in which the armrest is moveably, e.g. slideable, relative to the carrier.

The position on the engagement surface at which the engaging surface engages the engagement surface may vary as the armrest is slid relative to the carrier.

The latch mechanism may be configured, e.g. the first and/or second actuator member axed, and/or the rotation part pivot axis may be arranged, such that a movement of the claw when the latch actuator is actuated is greater than an extent of engagement between the claw and the opening in all positions of the armrest relative to the carrier.

At least one of the engaging surface and the engagement surface may comprise a ramp surface. The ramp surface may be arranged such that engagement between the engaging surface and the engagement surface causes the engaging surface and the engagement surface to slide relative to one another, thereby urging the second actuator member to move relative to the first actuator member.

The latch mechanism may further comprise a further claw movably supported on the carrier for engaging a further opening in the box body to latch the carrier to the box body. The further claw may be coupled to the rotation part, e.g. at a position spaced apart from the rotation part pivot axis, such that the further claw is moved to disengage from the further opening, e.g. regardless of the slide position of the armrest, when the latch mechanism is actuated.

The further claw may be coupled to the rotation part on an opposite side of the rotation part axis from the position at which the claw is coupled to the rotation part.

The claw may be configured to engage the opening on a same side of the rotation part axis as the position at which the claw is coupled to the rotation part. The further claw may comprise an arcuate portion arranged such that the further claw engages the further opening on the same side of the rotation part axis that the claw engages the opening.

According to another aspect of the present disclosure, there is provided a console box assembly comprising: an armrest having an upper body and a lower body; and a height adjustment mechanism for adjusting a height between an upper surface of the upper body and a lower extent of the lower body, wherein the height adjustment mechanism comprises: a scissor linkage mechanism comprising: a first link member having a first end and a second end, wherein the first end is pivotally coupled to the lower body; and a second link member having a first end and a second end, wherein the first end is pivotally and slideably coupled to the lower body, wherein the first and second link members are pivotally coupled together at a position between the first and second ends of the first and second link members, and wherein the second ends of the first and second link members are arranged to contact the upper body and prevent the distance between the upper surface of the upper body and a lower extent of the lower body reducing to less than a distance between the first and second ends of the first and second link member; a first rack coupled to the first end of the second link member; a second rack coupled to the lower body, wherein the first and second racks are configured to engage one another in order to restrict movement of the first rack relative to the second rack in a direction in which the first end of the second link member slides relative to the lower body; and an actuator for selectively disengaging the second rack from the first rack.

The console box assembly may further comprise a biasing element for biasing the first and second link elements to pivot relative to one another in order to increase the distance between the first and second ends of the first and second link members respectively in the height direction.

The console box assembly may further comprise a damping element arranged to damp pivoting movements of the first and second link members relative to one another. The damping element may be coupled to the lower body. The damping element may be a rotational damper comprising a gear engaged with first rack.

The second rack may be pivotally coupled to the lower body. The actuator may be configured to pivot second rack to disengage second rack from first rack. The first and second link members may be housed inside the lower body and/or the upper body.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1 is a side cross-sectional view of a console box assembly comprising a latch mechanism, according to arrangements of the present disclosure;
Figures 2a and 2b are perspective views of the latch mechanism for the console box assembly shown in Figure 1, in latched and unlatched configurations respectively;
Figure 3 is a front view of the console box assembly shown in Figure 1;
Figures 4a and 4b are partial cross-sectional views of first and second actuator members of the latch mechanism in first and second positions respectively;
Figures 5a and 5b are perspective, partially cut away views of the console box assembly illustrating the extents of movement of the armrest of the console box assembly relative to a carrier of the console box assembly;
Figure 6a is a side cross-sectional view of the console box assembly, with a height adjustment mechanism being locked in a lowered configuration;
Figure 6b is a side cross-sectional view of the console box assembly, with the height adjustment mechanism being unlocked in a raised configuration; and
Figure 7 is a perspective view of a scissor mechanism for the height adjustment mechanism shown in Figures 8a and 8b.

### Detailed Description

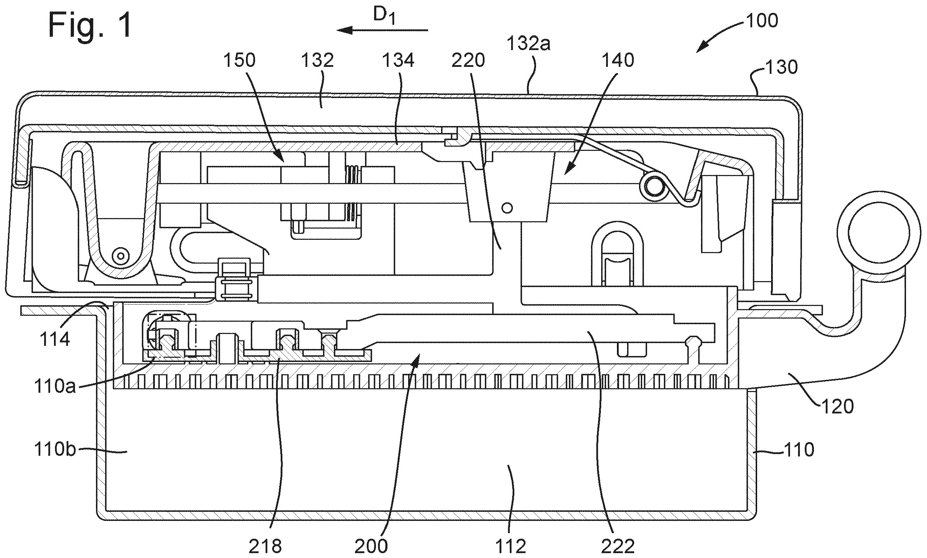

With reference to Figure 1, a console box assembly 100 for a vehicle, such as a motor vehicle, according to arrangements of the present disclosure, comprises a box body 110, a carrier 120 and an armrest 130. The console box assembly 100 may be mounted, e.g. fixedly mounted, within a vehicle interior. For example, the box body 110 of the console box assembly 100 may be configured to be fixedly mounted adjacent to a seat of the vehicle. In one or more arrangements, the console box assembly 100 may be to form at least part of a centre console for the vehicle.

The box body 110 may define a storage volume 112, e.g. for items to be stored within the console box assembly. The carrier 120 and/or the armrest 130 may be configured to form a lid for closing, e.g. covering, an opening 114 into the storage volume 112. For example, the carrier 120 may be movably, e.g. pivotally, mountable relative to the box body 110 in order to form the lid for selectively closing the opening 114.

The armrest 130 may be further configured to provide an ergonomic surface for an occupant of vehicle to rest their arm on, e.g. when travelling in or driving the vehicle. In order to improve the ergonomic function of the armrest 130, the position of the armrest 130 may be adjustable relative to the carrier 120 and/or the box body 110. In particular, the armrest 130 may be movable, e.g. slideably movable, relative to the carrier 120 and/or box body 110 in a sliding direction D₁. In this way, the position of the armrest 130 relative to the seat of the vehicle may be adjusted. When the console box assembly 100 is installed within a vehicle, the sliding direction D₁ of the armrest 130 may be at least partially aligned with a direction in which the seat of the vehicle faces, e.g. a longitudinal direction of the vehicle. In the arrangement depicted, the sliding direction D₁ is aligned with a longitudinal direction of the console box assembly 100.

The console box assembly 100 further comprises a mechanism 140 for enabling the armrest 130 to be moved relative to the carrier 120. For example, the mechanism 140 may be a sliding mechanism for enabling the armrest 130 to be displaced, e.g. slid, relative to the carrier 120. The mechanism 140 may enable the armrest 130 to slide relative to the carrier in the sliding direction D₁. In this way, the position of the ergonomic surface 132a of the armrest may be selectively adjusted.

The mechanism 140 may further comprise a lock mechanism 150 for locking the position of the armrest 130 relative to the carrier 120, e.g. in the sliding direction D₁. The lock mechanism 150 may be configured to selectively lock the mechanism 140 to prevent movement of the armrest 130 by virtue of the mechanism 140.

The armrest 130 may comprise an upper body 132 and a lower body 134. The ergonomic surface of the armrest may be provided by the upper body 132. For example, the ergonomic surface may be an upper surface 132a of the upper body. The upper body 132 may be movably coupled to the lower body 134. For example, the upper body 132 may be pivotally coupled to the lower body 134. Moving, e.g. pivoting, the upper body 132 relative to the lower body 134 may actuate a mechanism of the armrest 130, such as the lock mechanism 150 for locking the position of the armrest 130 relative to the carrier 120.

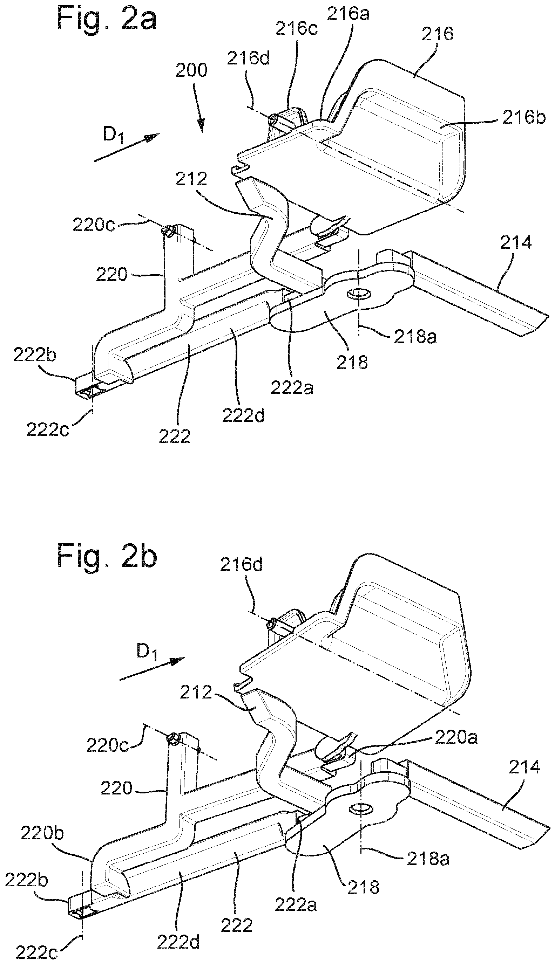

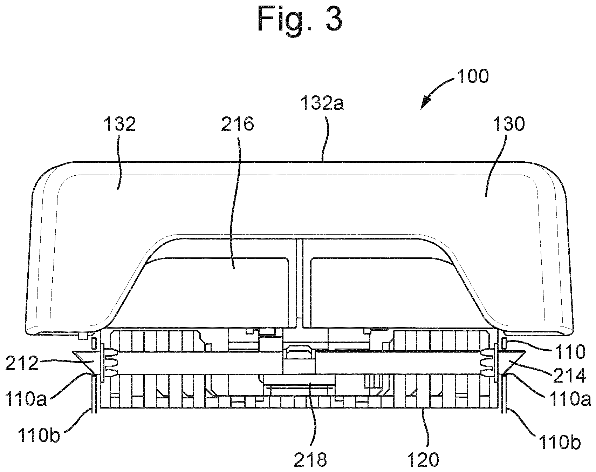

Referring now to Figures 2a, 2b and 3, in addition to Figure 1, the console box assembly 100 further comprises a latch mechanism 200 for latching, e.g. selectively securing, the carrier 120 to the box body 110. The latch mechanism 200 may be configured to selectively fix the position of the carrier 120 relative to the box body 110. The latch mechanism 200 may be configured to latch the carrier 120 to the box body 110 in a position in which the carrier 120 closes, e.g. covers or fills, the opening 114 into the storage volume 112.

The latch mechanism 200 comprises a first claw, or bolt, 212 movably, e.g. slideably and/or pivotally, supported on the carrier 120. The latch mechanism 200 further comprises one or more openings 110a formed in the box body 110, e.g. in an internal wall 110b of the box body 110. The latch mechanism 200 is configured to selectively move the first claw 212 relative to the box body 110 so that the first claw 212 selectively engages and disengages from one of the openings 110a in the box body 110.

As shown in Figures 2a, 2b and 3, the latch mechanism 200 may further comprise a second claw, or bolt, 214 movably, e.g. slideably and/or pivotally, supported on the carrier 120. The latch mechanism 200 may be configured to selectively move the second claw 214 relative to the box body 110 so that the second claw selectively engages and disengages from another of the openings 110a in the box body 110.

In the arrangements described herein, the latch mechanism 200 is configured such that the first and second claws 214, 214 are moved in lateral directions, e.g. opposing lateral directions, of the console box assembly 100. The lateral directions may be perpendicular to the sliding direction D₁ of the console box assembly. The first and second claws are configured to enter, e.g. move or project into, respective openings 110a in the box body 110 in the lateral directions, and the openings 110a are oriented accordingly. In other arrangements, the latch mechanism 200 may be configured to selectively move the first and second claws 212, 214 in any other direction, or directions. In such arrangements, the openings 110a may be oriented accordingly, to receive the first and second claws 212, 214 moving in the other directions.

The latch mechanism 200 further comprises a latch actuator 216. The latch actuator is moveably, e.g. pivotally, coupled to the armrest 130, such as the upper body 132 and/or lower body 134 of the armrest. The latch mechanism 200 is configured such that movement of the latch actuator 216 relative to the armrest 130 causes the first claw 212, and optionally the second claw 214, to move relative to the carrier 120 to engage, or become disengaged from the respective openings 110a in the box body. As depicted, the latch actuator may comprise a body part 216a, a handle part 216b, to be acted on by a user to move the latch actuator 216, and one or more spindle parts 216c for supporting pivotal movement of the latch actuator 216 relative to the armrest 130. For example, the spindle parts 216c may be received within openings formed in the armrest 130 to support pivotal movement of the latch actuator 216. The spindle parts 216c may be arranged to support rotation of the latch actuator about a latch actuator axis 216d. The latch actuator axis 216d may extend in a direction with a component perpendicular to the sliding direction D₁ of the armrest, e.g. a direction parallel with the lateral direction of the armrest 130.

The latch mechanism 200 further comprises a rotation part 218. The rotation part 218 is pivotally supported on the carrier 120 for rotation about a rotation part axis 218a. As depicted, the rotation part axis 218a may extend in a direction with a component perpendicular to the latch actuator axis 216d, and optionally the sliding direction D₁. For example, the rotation part axis 218a may extend in a vertical direction, e.g. when the console box assembly is installed within a vehicle.

The first and second claws 212, 214 may be coupled to the rotation part 218. In particular, the first and second claws 212, 214 may be coupled to the rotation part 218 at positions on the rotation part 218 spaced apart from the rotation part axis 218a. In this way, rotation of the rotation part 218 causes displacement of the first and second claws 212, 214. For example, rotation of the rotation part 218 may cause the first and second claws 212, 242 to move in directions perpendicular to the rotation part axis 218a, such as the lateral direction.

As described above, the first and second claws 212, 214 may be configured to move in opposing directions, and in such arrangements, the first and second claws 212, 214 may be coupled to the rotation part 218 on opposite sides of the rotation part axis 218a from one another, e.g. relative to a longitudinal direction of the console box assembly 100.

As depicted, the second claw 214 may be configured to engage one of the openings 110a on a same side of the rotation part axis 218a as the position at which the second claw is coupled to the rotation part, e.g. in the longitudinal direction of the console box assembly. The first claw 212 may comprise an arcuate portion 212a arranged such that the first claw 212 engages another of the openings 110a on the same side of the rotation part axis as the opening engaged by the second claw, e.g. which is on an opposite side of the rotation part axis 218a from the position at which the first claw 212 is coupled to the rotation part in the longitudinal direction. The openings 110a may be substantially aligned in the longitudinal direction of the console box assembly.

The latch mechanism 200 further comprises a first actuator member 220 and a second actuator member 222. The first actuator member 220 is coupled to the latch actuator 216. The second actuator member 222 is coupled to the rotation part 218. The latch mechanism 200 is configured such that the first actuator member 220 is moved, e.g. pivoted, when the latch actuator 216 is actuated. The first actuator member 220 is configured to engage the second actuator member 222 so that, when the first actuator member 220 moves, e.g. due to the latch actuator being actuated, the first actuator member 220 urges the second actuator member to move and rotate the rotation part 218. The latch mechanism 200 is thereby configured such that actuating the latch actuator 216 causes the rotation part 218 to rotate. As described above, rotation of the rotation part 218 causes the first and second claws 212, 214 to move relative to the box body 110, e.g. to engage or disengage from the openings 110a in the box body.

The first actuator member 220 may be movably, e.g. pivotally, mounted on the armrest 130. For example, the first actuator member 220 may be pivotally coupled to the upper or lower body 132, 134 of the armrest for pivotal movement about a first actuator member axis 220c. The first actuator member axis 220c may extend in a direction with a component perpendicular to the sliding direction D₁ of the armrest, e.g. a direction parallel with the lateral direction of the armrest 130. The first actuator member axis 220c may extend in a direction parallel with the latch actuator axis 216d.

The first actuator member 220 comprises a first end 220a and a second end 220b. The first actuator member may be coupled to the latch actuator 216 at the first end 220a. For example, the first end 220a of the first actuator member may be pivotally coupled to the body part 216a of the latch actuator at a position on the latch actuator spaced apart from the latch actuator axis 216d. The first actuator member 220 may be configured to engage the second actuator member 222 at the second end 220b of the first actuator member. The first actuator member 220 may be coupled to the armrest 130 at a position between the first and second ends 220a, 220b.

The second actuator member 222 may be movably, e.g. pivotally, mounted on the carrier 120. In particular, the second actuator member 222 may be supported for pivotal movement about a second actuator member axis 222c having at least a component parallel with the rotation part axis 218d. The second actuator member axis 222c may be at an angle, e.g. perpendicular, relative to the first actuator member axis 220c. The second actuator member 222 may comprise a first end 222a and a second end 222b. The second actuator member 222 may be coupled to the rotation part 218 at the first end 222a. The second actuator member 222 may be movably, e.g. pivotally, coupled to the carrier 120 at the second end 222b. The second actuator member 222 may be configured to engage (or be engaged by) the first actuator member 220 at a position on the second actuator member between the first and second ends 222a, 222b.

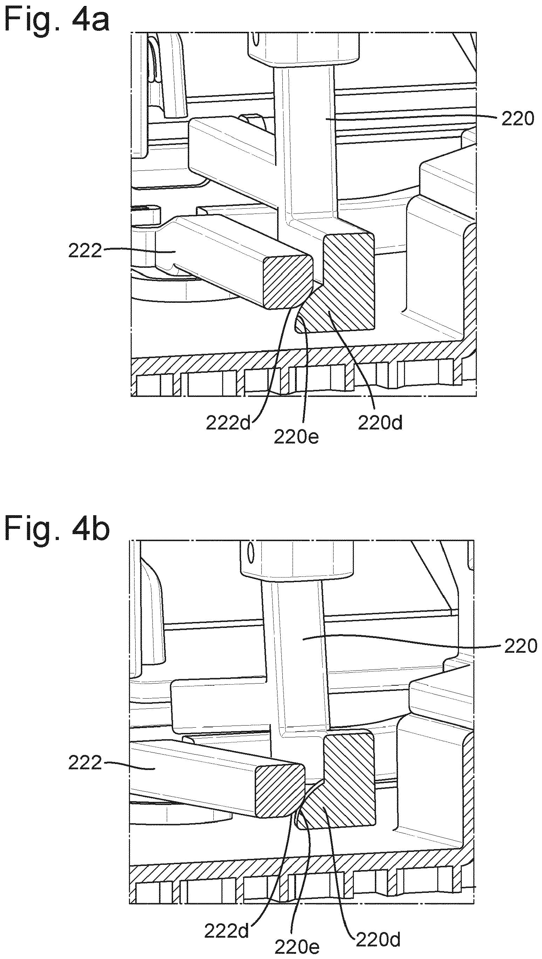

With reference to Figures 4a and 4b, the first actuator member 220 may comprise an engaging portion 220d for engaging the second actuator member 222. The engaging portion 220d may be formed at the second end 222b of the first actuator member. The engaging portion 220d may comprise an engaging surface 220e. The second actuator member 222 may comprise an engagement surface 222d and the first and second actuator members 220, 222 may be configured such that engagement between the first and second actuator members is between the engaging surface 220e of the first actuator member and the engagement surface 222d of the second actuator member.

At least one of the engaging surface 220e and the engagement surface 222d comprises a ramp surface. The ramp surface is arranged such that engagement between the engaging surface 220e and the engagement surface 222d causes the engaging surface and the engagement surface to slide relative to one another, thereby urging the second actuator member 222 to move relative to the first actuator member 220. For example, the engaging surface 220e may comprise a ramp surface and the engagement surface 222d may comprise a complementary ramp surface. The ramp surface and complementary ramp surface may be arranged such that engagement between the ramp surface and complementary ramp surface causes the complementary ramp surface to slide over the ramp surface, thereby urging the second actuator member to move relative the first actuator member.

At least one of the engaging surface 220e and the engagement surface 222d, e.g. the ramp surface and/or complementary ramp surface, is angled relative to a direction in which the first actuator member 220, e.g. the second end 220b of the first actuation member, moves when actuated by the latch actuator 216. Due to the angle of the engaging surface 220e and/or the engagement surface 222d, when the first actuator member 220 engages the second actuator member 222, the second actuator member is urged to move in a direction at an angle, e.g. perpendicular, relative to the direction in which the first actuator member 220 moves to engage the second actuator member.

Figure 4a depicts the relative positions of the first and second actuator members 220, 222 in a first position, prior to the second actuator member 222 being urged to move by the first actuator member 220, and Figure 4b depicts the relative positions of the first and second actuator members 220, 222 in a second position, after the second actuator member has been urged to move by the first actuator member. As depicted, when the second actuator member 222 is urged to move by the first actuator member 220, a position on the engaging surface 220e at which the first and second actuator members engage moves over the engaging surface. Additionally or alternatively, a position on the engagement surface 222d at which the first and second actuator members engage may move over the engagement surface.

Due to the relative arrangements of the pivot axes 220c, 222c, 218a of the first and second actuator members, and the rotation part, movement of the second actuator member due to the engagement by the first actuator member 220 may act to rotate the rotation part 218 about the rotation part axis 218a.

Returning to Figures 2a and 2b, the engagement surface 222d may extend along the second actuator member 222 at least partially over a length of the second actuator member between the first end 222a and the second end 222b. A length of the second actuator member 222 between the first and second ends 222a, 222b may be greater than a distance, e.g. a maximum distance, that the armrest 130 is able to move relative to the carrier 120 in the sliding direction D₁. The length over which the engagement surface 222d extends may be greater than or equal to the distance, e.g. the maximum distance, that the armrest 130 is able to move relative to the carrier 120 in the sliding direction D₁. In this way, the engaging surface 220e of the first actuator member may remain in contact with the engagement surface 222d of the second actuator member when the armrest 130 is moved relative to the carrier 120 in the sliding direction D₁.

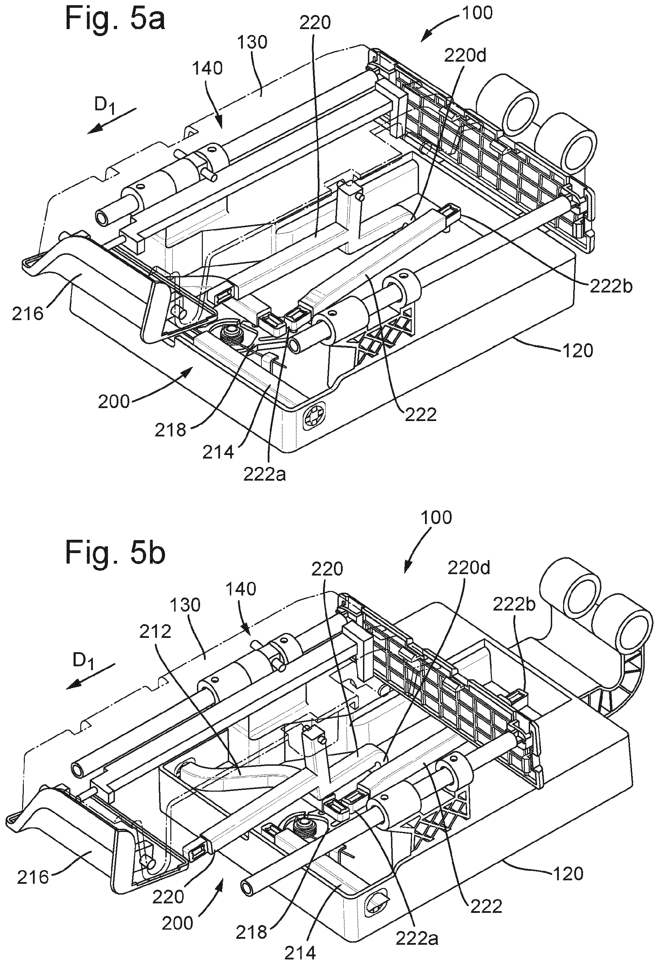

Figures 5a and 5b show the console box assembly 100 with a portion of the armrest 130 omitted for clarity of illustration. Figures 5a and 5b depict the extents of permitted movements of the armrest 130 relative to the carrier 12, e.g by virtue of the mechanism 140, according to one or more arrangements.

Figure 5a shows the console box assembly 100 in a configuration in which the armrest 130 is positioned so as to substantially overlie the carrier 120 in the sliding direction D₁. The position of the armrest 130 depicted in Figure 5a may be referred to as a minimum displacement position of the armrest 130. When the sliding direction D₁ is aligned with a longitudinal direction of the console box assembly 100 the position of the armrest 130 depicted in Figure 5a may be a rearmost extent of the permitted movement of the armrest 130 relative to the carrier 120.

When the armrest is in the minimum displacement position, the engagement portion 220d of the first actuator member is at least partially aligned with the second actuator member 222 between the first and second ends 222a, 222b of the second actuator member, so that the engaging surface 220e can engage the engagement surface 222d of the second actuator member and urge the second actuator member 222 to move, as described above.

Figure 5b shows the console box assembly 100 in a configuration in which the armrest 130 has been moved, e.g. slid, a distance in the sliding direction D₁. In the configuration shown in Figure 5b, the armrest 130 may be in a maximum displacement position, e.g. in which the armrest is in a maximum forward position relative to the carrier 120. As can be seen in Figure 5b, when the armrest 130 is in the maximum displacement position, the engaging portion 220d of the first actuator member remains at least partially aligned with the second actuator member between the first and second ends 222a, 222b of the second actuator member, so that the engaging surface 220e remains engaged or able to engage with, the engagement surface 222d of the second actuator member, and can urge the second actuator member 222 to move, as described above.

As depicted in Figures 5a and 5b, when the armrest 130 is in the minimum displacement position, the engaging surface 220e can engage the engagement surface 222d at a position closer to the second end 222b of the second actuator member than when the armrest is in the maximum displacement position. As described above, the second actuator member may be pivotally coupled to the carrier 120 at the second end 222b of the second actuator member. Hence, a distance that the first end 222a of the second actuator member can be urged to move due to the engagement between the first and second actuator members 220, 222 is greater when the armrest is in the minimum displacement position compared to when the armrest is in the maximum displacement position. This difference in movement of the second end 222b of the second actuator member is reflected in reduced movement of the first and second claws 212, 214 when the latch mechanism 200 is actuated whilst the armrest is in the maximum displacement position.

As illustrated in Figure 5b, when the latch mechanism 200 is actuated whilst the armrest 130 is in the maximum displacement position, the first and second claws 212, 214 protrude outwardly from the carrier 120, e.g. towards the openings 110a, by a greater distance than when the latch mechanism 200 is actuated whilst the armrest 130 is in the minimum displacement position depicted in Figure 5a. The latch mechanism 200 is configured such that the movement of the first and second claws 212, 214 under the action of the latch mechanism 200, e.g. due to actuation of the latch actuator 216, is sufficient to selectively disengage the first and second claws 212, 214 from the respective openings 110a of the box body 110 in any position of the armrest 130 between the minimum and maximum displacement positions of the armrest 130.

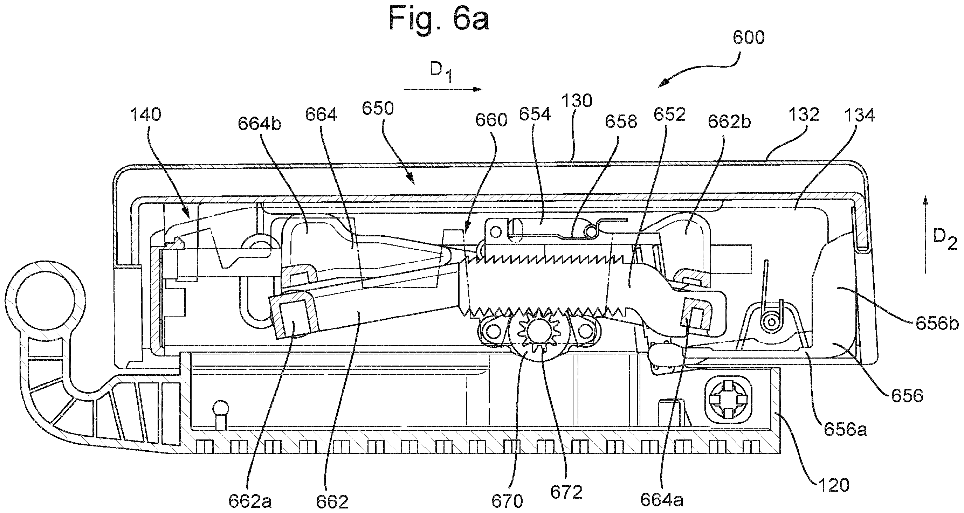

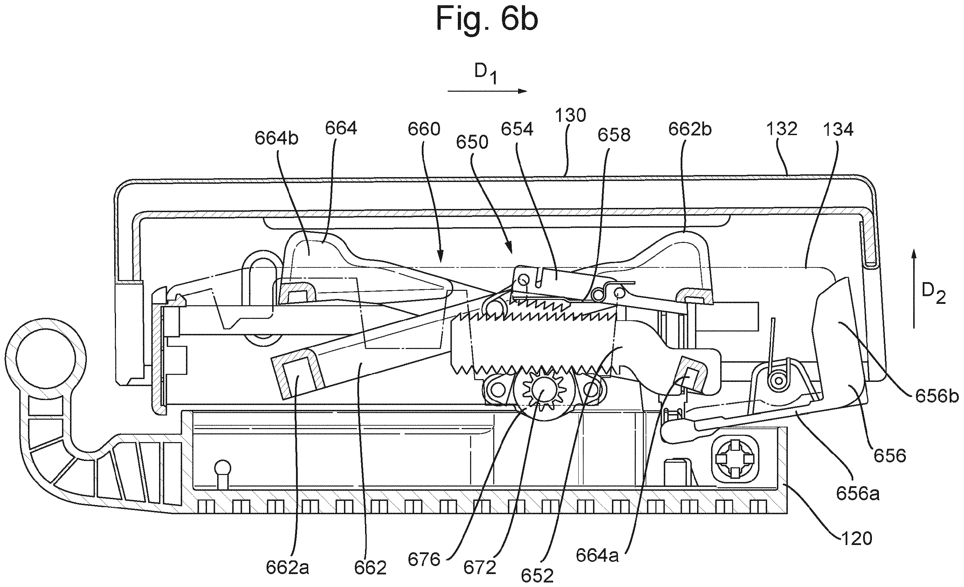

With reference to Figures 6a and 6b, a console box assembly 600 according to another arrangement of the present disclosure will now be described. The console box assembly 600 may be similar to the console box assembly 100 and features described above in relation to the console box assembly 100 may apply equally to the console box assembly 600. In particular, the console box assembly 600 comprises the armrest 130, having the upper body 132 and the lower body 134 and the carrier 120. The console box assembly 600 may comprise the mechanism 140, and may further comprise the slide lock mechanism 150.

The console box assembly 600 further comprises a height adjustment mechanism 650 for adjusting a position, e.g. height, of the upper body 132 of the armrest 130. In particular, the height adjustment mechanism may be for adjusting a distance, e.g. in a vertical direction, between the upper surface 132a of the upper body 132 and the lower body 134 of the armrest 130.

The height adjustment mechanism 650 comprises a first link member 662 and a second link member 664. The first and second link members 662, 664 each comprise a first end 662a, 664a and a second end 662b, 664b. The first and second link members 662, 664 are pivotally coupled to one another at a positions between the first and second ends of the link members. In other words, the first and second link members are configured to form a scissor linkage mechanism 660. The first and second link members 662, 644 may be housed inside the upper body 132 and/or the lower body 134.

The first end 662a of the first link member is pivotally coupled to the lower body 134 of the armrest and the first end 664a of the second link member is pivotally and slideably coupled to the lower body 134. The second ends 662b, 664b of the first and second link members are configured to contact the upper body 132 of the armrest and prevent the distance between the upper surface 132a of the upper body and the lower body 142, e.g. a lower extent of the lower body, reducing to less than a distance between the first and second ends of the first and second link members in the second direction D₂, e.g. the vertical direction. In the arrangement shown, the second direction D₂ comprises at least a component in a direction perpendicular to the sliding direction D₁.

The height adjustment mechanism 650 further comprises a first rack 652 coupled to the first end 664a of the second link member and a second rack 654 coupled to the lower body 134. The first and second racks 652, 654 are configured to engage one another in order to restrict movement of the first rack 652 relative to the second rack 654 in a direction in which the first end 664a of the second link member slides relative to the lower body 134. For example, the first and/or second rack 652, 654 may comprise a plurality of teeth spaced along the respective racks in the direction in which the first end 664a of the second link member slides relative to the lower body 134.

The height adjustment mechanism 650 further comprises a rack actuator 656 for selectively disengaging the second rack 654 from the first rack 652, e.g. in order to permit the first end 664a of the second link member to slide relative to the lower body 134.

As depicted in Figures 6a and 6b, the rack actuator 656 may comprise a lever portion 656a pivotally coupled to the lower body 134 of the armrest, and a button portion 656b to be displaced by a user of the armrest in order to pivot the lever arm portion 656a to thereby displace the second rack 654 to disengage from the first rack 652. As illustrated, the second rack 654 may be pivotal mounted on the lower body 134 and may be pivoted relative to the first rack 652 by actuating the rack actuator 656 to disengage from the first rack 652. The second rack 654 may be biased into a position in which the second rack engages the first rack 652. For example, the height adjustment mechanism 650 may comprise one or more biasing members, such as springs 658, configured to bias the second rack 654 to engage the first rack 652.

The height adjustment mechanism 650 may further comprise a damper 670 configured to damp, e.g. provide resistance against, movement of the upper body 132 relative to the lower body 134 in the second direction D₂. As depicted, the damper 670 may be a rotational damper and may comprise a gear wheel 672 having teeth engaged with teeth of the first rack 652. The damper 670 may be coupled, e.g. fixedly coupled, to the lower body 134. When the first rack 652 moved relative to the lower body, e.g. together with the first end 664a of the second link member. The gear wheel 672 of the damper may be rotated by virtue of its engagement with the teeth of the first rack 652 and movement of lower body relative to the upper body may thereby be damped.

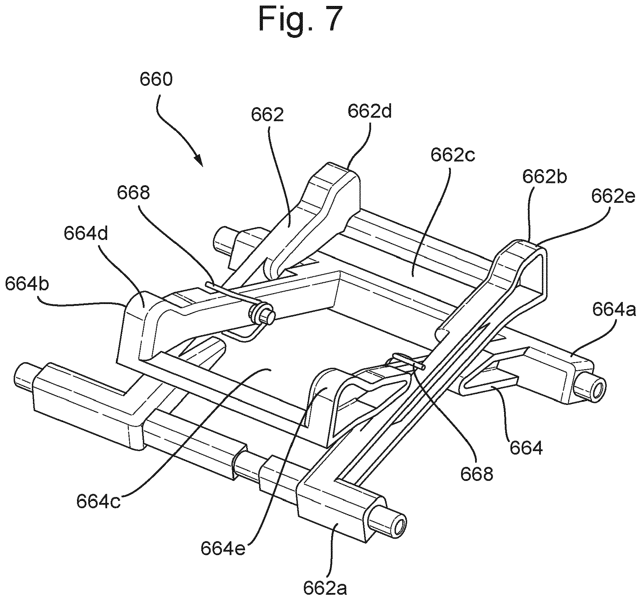

As depicted in Figure 7, the first link member 662 comprises an opening 662c formed between the first and second ends 662a, 664b of the first link member. The second member may extend through the opening 662c and the first and second link members 662, 664 may be pivotally coupled together at the opening. The second link member 664 may similarly comprise an opening 664c formed between the first and second ends 664a, 664b of the second link member. In some arrangements, the first link member may extend through the opening 664c and the first and second link members 662, 664 may be pivotally coupled together at the opening 664c.

As illustrated, the first link member 662 may comprise two or more contact surface portions 662d, 662e formed at the second end 662b of the first link member. The two or more contact surface portions may be arranged to contact the upper part 132 of the armrest 130 at laterally spaced positions on the upper part 132. For example, two or more contact surface portions may be arranged to contact the upper part 132 of the armrest 130 at opposing lateral sides of the upper part 132. The laterally spaced apart positions may be spaced apart in a direction perpendicular to the sliding direction D₁. The second link member 664 may similarly comprise two or more contact surface portions 664d, 664e formed at the second end 664b of the second link member. The two or more contact surface portions may be arranged to contact the upper part 132 of the armrest 130 at laterally spaced positions on the upper part 132. For example, the two or more contact surface portions may be arranged to contact the upper part 132 of the armrest 130 at opposing lateral sides of the upper part 132.

As depicted in Figure 7, the height adjustment mechanism 650 may further comprise one or more biasing elements 668, such as coil springs, for biasing the first and second link members 662, 664 to pivot relative to one another in order to increase the distance between the first and second ends 662a, 664a, 662b, 664b of the first and second link members respectively in the second direction D1, e.g. the height direction.

In the arrangement depicted in Figures 6a and 6b, and as described above, the height adjustment mechanism 650 is arranged such that the second ends of the first and second link members are spaced apart in a longitudinal direction of the armrest 130, e.g. a direction parallel with a direction in which a user faces when using the armrest and/or the sliding direction of the armrest. However, in other arrangements, the height adjustment mechanism may be oriented on the console box assembly 600, such that the second ends of the first and second link members are spaced apart in a lateral direction of the armrest, e.g. a direction perpendicular to a direction in which a user faces when using the armrest and/or the sliding direction of the armrest. In such arrangements, it will be appreciated that the directions in which the other parts of the height adjustment mechanism move and are spaced apart from one another in would be reoriented accordingly. For example, the two or more contact surface portions on the first and second link members may be arranged to contact the upper part 132 of the armrest 130 at positions on the upper part 132 spaced apart in the longitudinal direction of the armrest 130.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A console box assembly (100) comprising:
a box body (110) defining a storage volume (112);
a carrier (120) pivotally coupled to the box body;
an armrest (130) slideable relative to the carrier; and
a latch mechanism (200) for latching the carrier to the box body, wherein the latch mechanism comprises:
an opening (110a) formed in an internal wall (110b) of the box body;
a claw (212) movably supported on the carrier for engaging the opening to latch the carrier to the box body;
a latch actuator (216) coupled to the armrest;
a rotation part (218) pivotally supported on the carrier for rotation about a rotation part axis (218a), **characterized in that**
the claw is coupled the rotation part; wherein a first actuator member (220) coupled to the latch actuator; and
a second actuator member (222) coupled to the rotation part, wherein the first actuator member is arranged to engage the second actuator member and urge the second actuator member to rotate the rotation part in response to actuation of the latch actuator regardless of the slide position of the armrest, so that the claw disengages from the opening.

2. The console box assembly of claim 1, wherein the second actuator member is pivotally supported on the carrier for rotation about a second actuator member axis (222c).

3. The console box assembly of claim 2, wherein the second actuator member axis has a component parallel with the rotation part axis.

4. The console box assembly of claim 2 or 3, wherein the first actuator member is pivotally supported on the armrest for rotation about a first actuator member axis (220c), wherein the first actuator member axis is at an angle relative to the second actuator member axis.

5. The console box assembly of any of the preceding claims, wherein the first actuator member has an engaging surface (220e) wherein the engaging surface is arranged to contact an engagement surface (222d) formed on the second actuator member when the latch actuator is actuated, and urge the second actuator member to rotate the rotation part.

6. The console box assembly of claim 5, wherein the first actuator member is coupled to the latch actuator at a first end (220a) of the first actuator member, wherein the engaging surface is formed at a second end (220b) of the first actuator member, and wherein the first actuator member is pivotally supported on the armrest at a position on the first actuator member between the first and second ends.

7. The console box assembly of claim 5 or 6, wherein the engagement surface is disposed between the second actuator member axis and the position at which the second actuator member is coupled to the rotation part.

8. The console box assembly of any of claims 5 to 7, wherein the engagement surface extends along the second actuator member in a direction with a component in a direction (Dᵢ) in which the armrest is slideable relative to the carrier

9. The console box assembly according to any of claims 5 to 8, wherein the position at which the engaging surface engages the engagement surface varies as the armrest is slid relative to the carrier.

10. The console box assembly of claim 9, wherein the latch mechanism is configured such that a movement of the claw when the latch actuator is actuated is greater than an extent of engagement between the claw and the opening in all positions of the armrest relative to the carrier.

11. The console box assembly according to any of claims 5 to 10, wherein at least one of the engaging surface and the engagement surface comprises a ramp surface, wherein the ramp surface is arranged such that engagement between the engaging surface and the engagement surface causes the engaging surface and the engagement surface to slide relative to one another, thereby urging the second actuator member to move relative to the first actuator member.

12. The console box assembly of any of the preceding claims, wherein the latch mechanism further comprises a further claw (214) movably supported on the carrier for engaging a further opening (110a) in the box body to latch the carrier to the box body, wherein the further claw is coupled to the rotation part, such that the further claw disengages the further opening regardless of the slide position of the armrest when the latch mechanism is actuated.

13. The console box assembly of claim 12, wherein the further claw is coupled to the rotation part on an opposite side of the rotation part axis from the position at which the claw is coupled to the rotation part.

14. The console box assembly of claim 12 or 13, wherein the claw is configured to engage the opening on a same side of the rotation part axis as the position at which the claw is coupled to the rotation part, and wherein the further claw comprises an arcuate portion arranged such that the further claw engages the further opening on the same side of the rotation part axis that the claw engages the opening.

## Patentansprüche

1. Konsolenkastenanordnung (100), umfassend:
einen Kastenkörper (110), der ein Aufbewahrungsvolumen (112) definiert;
einen Träger (120), der schwenkbar an den Kastenkörper gekoppelt ist;
eine Armlehne (130), die relativ zu dem Träger verschiebbar ist; und
einen Verriegelungsmechanismus (200) zum Verriegeln des Trägers an dem Kastenkörper, wobei der Verriegelungsmechanismus Folgendes umfasst:
eine Öffnung (110a), die in einer Innenwand (110b) des Kastenkörpers ausgebildet ist;
eine Klaue (212), die beweglich an dem Träger zum Eingreifen in die Öffnung gelagert ist, um den Träger an dem Kastenkörper zu verriegeln;
einen Verriegelungsaktor (216), der an die Armlehne gekoppelt ist;
ein Drehteil (218), das schwenkbar an dem Träger zur Drehung um eine Drehteilachse (218a) gelagert ist, **dadurch gekennzeichnet, dass** die Klaue an das Drehteil gekoppelt ist;
wobei ein erstes Aktorelement (220) an den Verriegelungsaktor gekoppelt ist; und
ein zweites Aktorelement (222), das an das Drehteil gekoppelt ist, wobei das erste Aktorelement angeordnet ist, um in das zweite Aktorelement einzugreifen und das zweite Aktorelement zu drängen, sich als Reaktion auf eine Betätigung des Verriegelungsaktors unabhängig von der Verschiebeposition der Armlehne um das Drehteil zu drehen, sodass sich die Klaue von der Öffnung löst.

2. Konsolenkastenanordnung nach Anspruch 1, wobei das zweite Aktorelement schwenkbar an dem Träger zur Drehung um eine zweite Aktorelementachse (222c) gelagert ist.

3. Konsolenkastenanordnung nach Anspruch 2, wobei die zweite Aktorelementachse eine Komponente parallel zur Drehteilachse aufweist.

4. Konsolenkastenanordnung nach Anspruch 2 oder 3, wobei das erste Aktorelement zur Drehung um eine erste Aktorelementachse (220c) schwenkbar an der Armlehne gelagert ist, wobei die erste Aktorelementachse in einem Winkel relativ zu der zweiten Aktorelementachse liegt.

5. Konsolenkastenanordnung nach einem der vorhergehenden Ansprüche, wobei das erste Aktorelement eine Eingriffsfläche (220e) aufweist, wobei die Eingriffsfläche angeordnet ist, um eine Eingriffsfläche (222d), die an dem zweiten Aktorelement ausgebildet ist, zu berühren, wenn der Verriegelungsaktor betätigt wird, und das zweite Aktorelement zu drängen, das Drehteil zu drehen.

6. Konsolenkastenanordnung nach Anspruch 5, wobei das erste Aktorelement an einem ersten Ende (220a) des ersten Aktorelements an den Verriegelungsaktor gekoppelt ist, wobei die Eingriffsfläche an einem zweiten Ende (220b) des ersten Aktorelements ausgebildet ist und wobei das erste Aktorelement an einer Position an dem ersten Aktorelement zwischen dem ersten und dem zweiten Ende schwenkbar an der Armlehne gelagert ist.

7. Konsolenkastenanordnung nach Anspruch 5 oder 6, wobei die Eingriffsfläche zwischen der zweiten Aktorelementachse und der Position, an der das zweite Aktorelement an das Drehteil gekoppelt ist, angeordnet ist.

8. Konsolenkastenanordnung nach einem der Ansprüche 5 bis 7, wobei sich die Eingriffsfläche entlang des zweiten Aktorelements in einer Richtung mit einer Komponente in einer Richtung (Dᵢ) erstreckt, in der die Armlehne relativ zu dem Träger verschiebbar ist.

9. Konsolenkastenanordnung nach einem der Ansprüche 5 bis 8, wobei die Position, an der die Eingriffsfläche in die Eingriffsfläche eingreift, variiert, wenn die Armlehne relativ zu dem Träger verschoben wird.

10. Konsolenkastenanordnung nach Anspruch 9, wobei der Verriegelungsmechanismus derart konfiguriert ist, dass eine Bewegung der Klaue, wenn der Verriegelungsaktor betätigt wird, in allen Positionen der Armlehne relativ zu dem Träger größer ist als ein Ausmaß des Eingriffs zwischen der Klaue und der Öffnung.

11. Konsolenkastenanordnung nach einem der Ansprüche 5 bis 10, wobei mindestens eine von der Eingriffsfläche und der Eingriffsfläche eine Rampenfläche umfasst, wobei die Rampenfläche derart angeordnet ist, dass ein Eingriff zwischen der Eingriffsfläche und der Eingriffsfläche bewirkt, dass die Eingriffsfläche und die Eingriffsfläche relativ zueinander gleiten, wodurch das zweite Aktorelement gedrängt wird, sich relativ zu dem ersten Aktorelement zu bewegen.

12. Konsolenkastenanordnung nach einem der vorhergehenden Ansprüche, wobei der Verriegelungsmechanismus ferner eine weitere Klaue (214) umfasst, die beweglich an dem Träger zum Eingreifen in eine weitere Öffnung (110a) in dem Kastenkörper gelagert ist, um den Träger an dem Kastenkörper zu verriegeln, wobei die weitere Klaue an das Drehteil gekoppelt ist, sodass die weitere Klaue die weitere Öffnung unabhängig von der Verschiebeposition der Armlehne freigibt, wenn der Verriegelungsmechanismus betätigt wird.

13. Konsolenkastenanordnung nach Anspruch 12, wobei die weitere Klaue auf einer gegenüberliegenden Seite der Drehteilachse zu der Position, an der die Klaue an das Drehteil gekoppelt ist, an das Drehteil gekoppelt ist.

14. Konsolenkastenanordnung nach Anspruch 12 oder 13, wobei die Klaue dazu konfiguriert ist, auf einer gleichen Seite der Drehteilachse wie die Position, an der die Klaue an das Drehteil gekoppelt ist, in die Öffnung einzugreifen, und wobei die weitere Klaue einen bogenförmigen Abschnitt umfasst, der derart angeordnet ist, dass die weitere Klaue in die weitere Öffnung auf der gleichen Seite der Drehteilachse eingreift, auf der die Klaue in die Öffnung eingreift.

## Revendications

1. Ensemble boîtier de console (100) comprenant :
un corps de boîtier (110) définissant un volume de stockage (112) ;
un support (120) couplé de manière pivotante au corps de boîtier ;
un accoudoir (130) coulissant par rapport au support ; et
un mécanisme de verrouillage (200) pour verrouiller le support sur le corps de boîtier, dans lequel le mécanisme de verrouillage comprend :
une ouverture (110a) ménagée dans une paroi interne (110b) du corps de boîtier ;
une griffe (212) supportée de manière mobile sur le support pour venir en prise avec l'ouverture pour verrouiller le support sur le corps de boîtier ;
un actionneur de verrou (216) couplé à l'accoudoir ;
une partie de rotation (218) montée de manière pivotante sur le support autour d'un axe de partie de rotation (218a), **caractérisé en ce que** la griffe est accouplée à la partie de rotation ;
dans lequel un premier élément d'actionnement (220) couplé à l'actionneur de verrou ; et
un second élément d'actionnement (222) couplé à la partie de rotation, dans lequel le premier élément d'actionnement est agencé pour venir en prise avec le second élément d'actionnement et pousser le second élément d'actionnement à faire tourner la partie de rotation en réponse à l'actionnement de l'actionneur de verrouillage quelle que soit la position de coulissement de l'accoudoir, de sorte que la griffe se libère de l'ouverture.

2. Ensemble boîtier de console selon la revendication 1, dans lequel le second élément d'actionnement est monté de manière pivotante sur le support autour d'un second axe d'élément d'actionnement (222c).

3. Ensemble boîtier de console selon la revendication 2, dans lequel le second axe d'élément d'actionnement a une composante parallèle à l'axe de partie de rotation.

4. Ensemble boîtier de console selon la revendication 2 ou 3, dans lequel le premier élément d'actionnement est monté de manière pivotante sur l'accoudoir pour une rotation autour d'un premier axe d'élément d'actionnement (220c), dans lequel le premier axe d'élément d'actionnement forme un angle par rapport au second axe d'élément d'actionnement.

5. Ensemble boîtier de console selon l'une quelconque des revendications précédentes, dans lequel le premier élément d'actionnement présente une surface de contact (220e) dans lequel la surface de contact est agencée pour entrer en contact avec une surface de mise en prise (222d) formée sur le second élément d'actionnement lorsque l'actionneur de verrou est actionné, et pour pousser le second élément d'actionnement à faire tourner la partie de rotation.

6. Ensemble boîtier de console selon la revendication 5, dans lequel le premier élément d'actionnement est couplé à l'actionneur de verrouillage au niveau d'une première extrémité (220a) du premier élément d'actionnement, dans lequel la surface de contact est formée au niveau d'une seconde extrémité (220b) du premier élément d'actionnement, et dans lequel le premier élément d'actionnement est supporté de manière pivotante sur l'accoudoir au niveau d'une position sur le premier élément d'actionnement entre les première et seconde extrémités.

7. Ensemble boîtier de console selon la revendication 5 ou 6, dans lequel la surface de mise en prise est disposée entre le second axe d'élément d'actionnement et la position d'accouplement du second élément d'actionnement à la partie de rotation.

8. Ensemble boîtier de console selon l'une quelconque des revendications 5 à 7, dans lequel la surface de mise en prise s'étend le long du second élément d'actionnement selon une direction (Dᵢ) dans laquelle l'accoudoir est coulissant par rapport au support.

9. Ensemble boîtier de console selon l'une quelconque des revendications 5 à 8, dans lequel la position à laquelle la surface de contact vient en prise avec la surface de mise en prise varie au fur et à mesure du coulissement de l'accoudoir par rapport au support.

10. Ensemble boîtier de console selon la revendication 9, dans lequel le mécanisme de verrouillage est conçu pour qu'un mouvement de la griffe lorsque l'actionneur de verrouillage est actionné soit supérieur à un degré de mise en prise entre la griffe et l'ouverture dans toutes les positions de l'accoudoir par rapport au support.

11. Ensemble boîtier de console selon l'une quelconque des revendications 5 à 10, dans lequel au moins l'une de la surface de contact et de la surface de mise en prise comprend une surface de rampe, dans lequel la surface de rampe est agencée de telle sorte que la mise en prise entre la surface de contact et la surface de mise en prise amène la surface de contact et la surface de mise en prise à glisser l'une par rapport à l'autre, ce qui permet de pousser le second élément actionneur à se déplacer par rapport au premier élément actionneur.

12. Ensemble boîtier de console selon l'une quelconque des revendications précédentes, dans lequel le mécanisme de verrouillage comprend en outre une autre griffe (214) supportée de manière mobile sur le support pour venir en prise avec une autre ouverture (110a) dans le corps de boîtier pour verrouiller le support au corps de boîtier, dans lequel l'autre griffe est couplée à la partie de rotation, de sorte que l'autre griffe libère l'autre ouverture quelle que soit la position de coulissement de l'accoudoir lorsque le mécanisme de verrouillage est actionné.

13. Ensemble boîtier de console selon la revendication 12, dans lequel l'autre griffe est couplée à la partie de rotation sur un côté opposé de l'axe de partie de rotation par rapport à la position dans laquelle la griffe est couplée à la partie de rotation.

14. Ensemble boîtier de console selon la revendication 12 ou 13, dans lequel la griffe est conçue pour venir en prise avec l'ouverture d'un même côté de l'axe de partie de rotation que la position dans laquelle la griffe est couplée à la partie de rotation, et dans lequel l'autre griffe comprend une partie arquée agencée de sorte que l'autre griffe vient en prise avec l'autre ouverture du même côté de l'axe de partie de rotation que la griffe vient en prise avec l'ouverture.
